# EUROPEAN PATENT APPLICATION

(11) **EP 2 418 864 A2**
(43) Date of publication of application: **15.02.2012**
(21) Application number: 11175512.0
(22) Date of filing: 27.07.2011
(51) Int. Cl.: H04N 13/04

(54) **Dual view display system**

(30) Priority: 09.08.2010 US 852647
(71) Applicant: Delphi Technologies, Inc., Troy, MI 48007 (US)
(72) Inventor: Kuhlman, Frederick F., Kokomo, IN Indiana 46902 (US); Harbach, Andrew P., Kokomo, IN Indiana 46901 (US); Sarma, Dwadasi H.R., Kokomo, IN Indiana 46902 (US); Sultan, Michel F., Troy, MI Michigan 48098 (US)
(74) Representative: Denton, Michael John

(57) **Abstract**

A dual view display system that displays two different images in different directions using a single display device to alternately time-multiplex the images and two shutter devices operated in coordination with the time-multiplexing to alternately allow or block viewing of the alternating images.

## Description

### TECHNICAL FIELD OF INVENTION

The invention generally relates to displays for displaying images or information, and more particularly relates to a system that time-multiplexes a single display with different images, and uses one or more optical elements in cooperation with light valves or shutter devices to display different images in different directions from the same display.

### BACKGROUND OF INVENTION

Dual view displays capable of showing different images to distinct persons viewing the display from different directions have been proposed. Such displays can, for example, display navigation information to a vehicle operator while displaying a movie to a passenger. Some of the known dual view displays use a parallax barrier or patterned barrier to allow selected pixels on a display to be viewed from one direction and blocked when viewed from another direction. A description of such displays can be found in United States Patent Application Publication Number 2008/0001849 published Jan. 3, 2008 by Jin et al. and 2008/0061305 published March 13, 2008 by Kim et al. Other dual view displays use a segmented backlighting source that directs light or emits light in a particular direction toward selected pixels by emitting light through apertures. The apertures are aligned with the pixels such that when the selected pixels are viewed from that particular direction, the selected pixels are more apparent than when viewed from another direction. A description of such a display can be found in United States Patent Number 7,671,935 issued on March 2, 2010 to Mather et al. In general, prior art devices rely on parallax angles and interlacing of images to display distinct images in different directions, and so when two images are displayed the resolution of each image is half of the resolution of the display. Furthermore, the direction that each image is displayed depends on careful control of lateral alignment and separation distance between the pixels and the parallax barrier or segmented backlighting source.

### SUMMARY OF THE INVENTION

Described herein is a dual view display system that uses an optical element overlaying the display to direct an image on the display in two distinct directions, and two shutter devices operated in coordination with multiplexing images on the display so distinct images can be displayed in the distinct directions.

In accordance with one embodiment of this invention, a dual view display system is provided. The system includes a display device, an optical element, a first shutter device, and a second shutter device. The display device is configured to display a first image on a display surface during a first time period and display a second image on the display surface during a second time period distinct from the first time period. The optical element overlays the display surface and is configured to direct images displayed on the display surface toward a first direction and a second direction distinct from the first direction. The first shutter device is configured to allow viewing of the display surface through the optical element from the first direction during the first time period, and block viewing of the display surface from the first direction during the second time period. The second shutter device is configured to allow viewing of the display surface through the optical element from the second direction during the second time period, and block viewing of the display surface from the second direction during the first time period.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a perspective view of vehicle interior equipped with a dual view display system in accordance with one embodiment;

Fig. 2 is a top sectional view of a dual view display of Fig. 1 in accordance with one embodiment;

Fig. 3 is a block diagram of the dual view display system of Fig. 1 in accordance with one embodiment;

Fig. 4 is a timing diagram of an operation in the dual view display system of Fig. 1 in accordance with one embodiment;

Fig. 5 is a top sectional view of a dual view display of Fig. 1 in accordance with one embodiment; and

Fig. 6 is a perspective view of a dual view display of Fig. 1 in accordance with one embodiment.

### DETAILED DESCRIPTION OF INVENTION

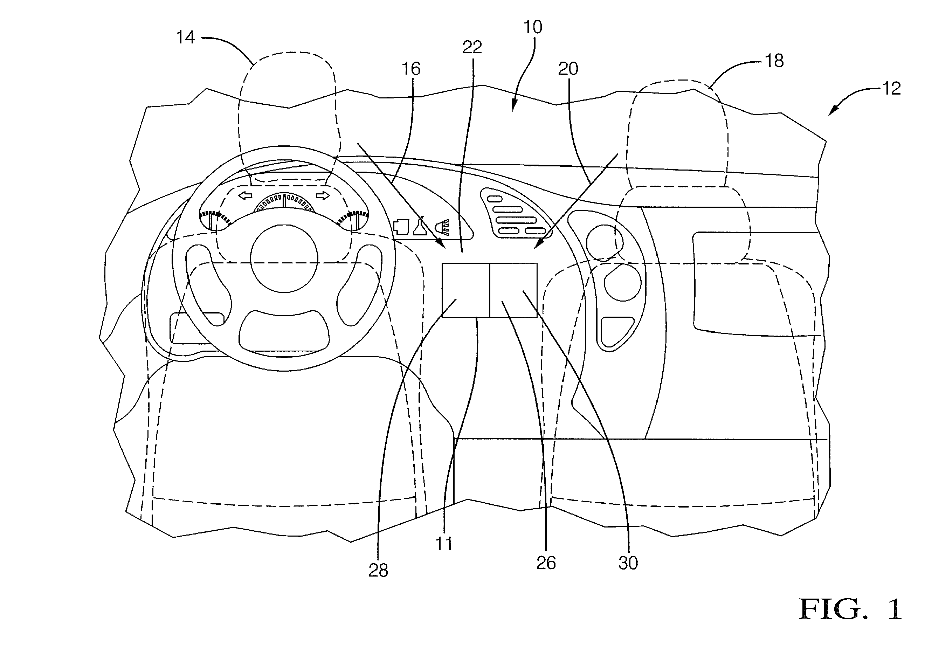

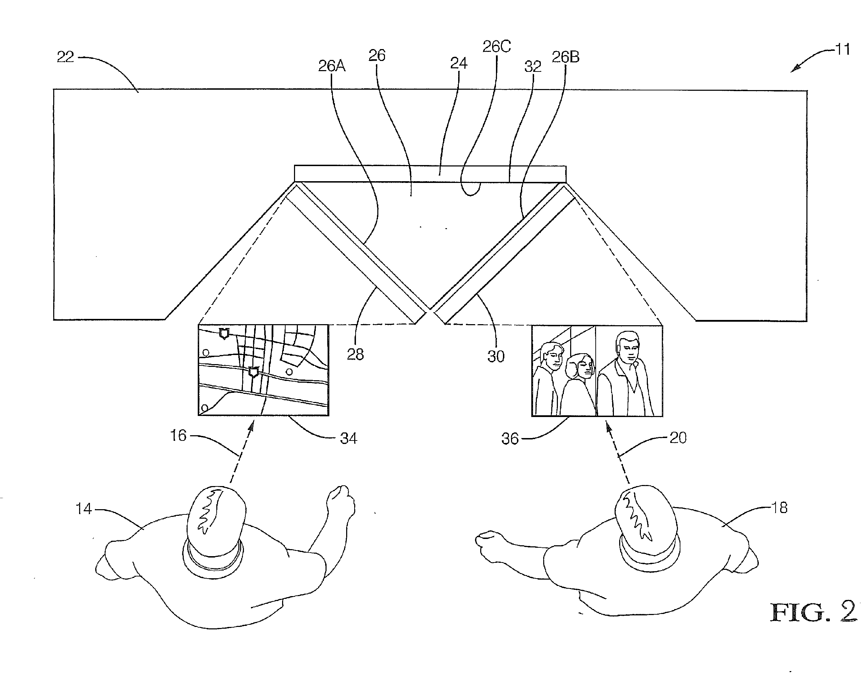

In accordance with an embodiment of a dual view display system 10, Figs. 1-2 illustrate a non-limiting example of a vehicle interior 12 equipped with a dual view display 11 located on a dashboard 22. The system 10 in this example is configured so as illustrated in Fig. 2, a driver 14 may view a first image 34 from a first direction 16, and a passenger 18 may view a second image 36 different from the first image 34 from a second direction 20 that is different from the first direction 16. Such a dual view display system 10 may, for example, display navigation information as the first image 34 to the driver 14 while also displaying a movie as the second image 36 to the passenger 18. By this arrangement, the system 10 appears to display two distinct images in two different directions for viewing by different persons at the same time from the same location on the dashboard 22, As such, the system 10 is distinguished from 3-D display systems that display two similar images for viewing by the same person from the same general direction. Fig. 2 illustrates a top sectional view of an embodiment of the dual view display 11 that includes a display device 24, an optical element 26, a first shutter device 28, and a second shutter device 30.

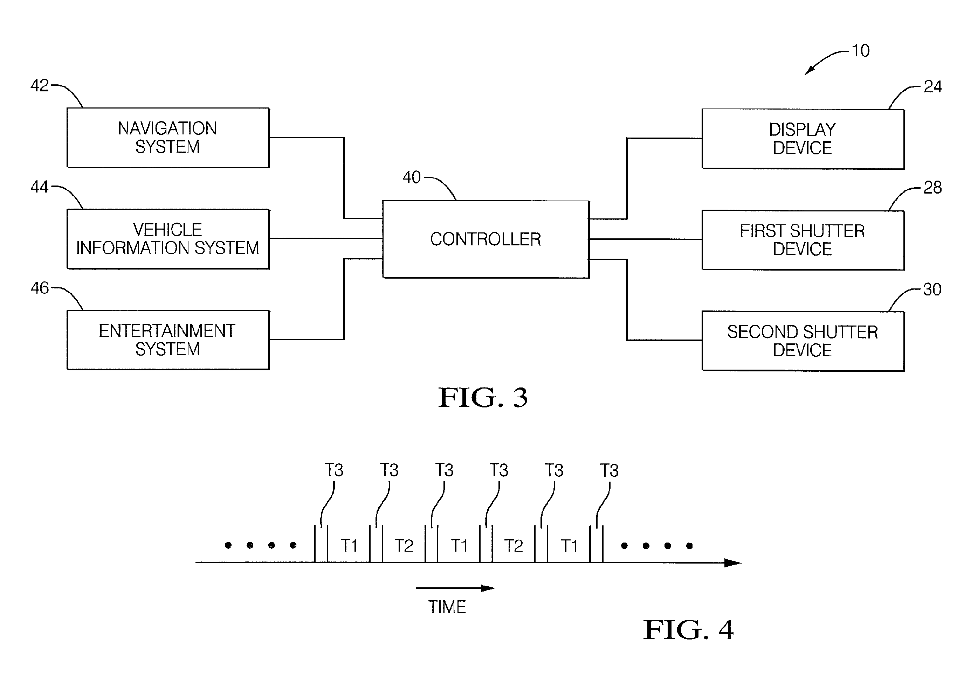

Fig. 3 illustrates a block diagram as a non-limiting example of the dual view display system 10. The system 10 may include a controller 40 that may include a processor such as a microprocessor or other control circuitry as should be evident to those skilled in the art. The controller 40 may include memory, including non-volatile memory, such as electrically erasable programmable read-only memory (EEPROM) for storing one or more routines and captured data. The one or more routines may be executed by the processor to perform steps for determining if signals are received by the controller 40 for displaying images as described herein. As suggested in the illustration, the controller 40 may receive an image signal from a navigation system 42 that, for example, shows the present geographical location of the system 10. The controller 40 may also receive information regarding vehicle operating status from a vehicle information system 44. The vehicle operating status may include, for example, engine coolant temperature or vehicle interior heating and air conditioning settings. The controller 40 may also receive entertainment information from an entertainment system 46. Entertainment information may include a pre-recorded movie. For reasons of avoiding distracting the driver 14, it may be desirable that the movie information only be displayed to the passenger 16. It will be appreciated that the dual view display system 10 may be used for non-vehicle applications where the controller 40 would receive signals from sources other than the systems 42, 44, and 46 suggested in Fig. 3. It will also be appreciated that the same image could be displayed to both the driver 14 and the passenger 18 so, for example, both persons could view navigational information.

Referring again to Fig. 2, the display device 24 may be an organic light emitting diode (OLED) type device, or a liquid crystal display (LCD) type device, or any type of display capable of displaying images and having an image refresh rate sufficient for time-multiplexing the first image 34 and the second image 36 so each image has a sufficient update rate for what is being displayed. For example, if a movie is being displayed to the passenger 18, a refresh rate of 30 frames per second for the second image 36 may be desirable. If navigation information is being displayed to the driver 14, a refresh rate of 10 frames per second may be adequate. As such, for this example, a display device 24 with a refresh rate of at least 40 frames per second may be adequate. OLED and LCD type devices are readily available with refresh rates of 60 frames per second are readily available and so would be suitable to use for the display device 24. With a refresh rate of 60 frames per second, the first image 34 and the second image 36 may be displayed every other frame so the refresh rate for the movie is adequate. If the display device 24 was limited to 40 frames per second, the first image 34 showing navigation information could be displayed every fourth frame, while the second image 36 showing the movie would be displayed during the intervening three frames. In general, the brightness of each frame is adjusted in accordance with the frame refresh rate. For example, if the passenger 18 turns the second image 36 off, the frame rate on the driver side may be increased and so the brightness of each frame displaying the first image 34 may need to be reduced to maintain the same brightness level as perceived by the driver 14. Fig. 4 illustrates a timing diagram depicting a repeating sequence of alternating a first time period T1 and a second time period T2 separated by a delay time T3 for displaying the first image 34 and the second image 36 every other frame. In general, the display device 24 is configured to display a first image 34 on a display surface 32 during the first time period T1 and display a second image 36 on the display surface 32 during a second time period T2 distinct from the first time period T1. The first time period T1 and second time period T2 are preferably short enough so that by alternating the displaying the first image 34 and the second image 36, both images appear to the driver 14 and passenger 16 to be uninterrupted. In general, any delay time T3 between the end of one time period and the start of a subsequent time period should be minimized so as to maximize the brightness of each image. By way of a non-limiting example, the first time period T1 and the second time period T2 may both be about 16 milliseconds (ms), and the third time period T3 may be about 1ms. However, it will be appreciated that the first time period T1 and the second time period T2 do not need to be the same value.

Fig. 2 further illustrates the optical element 26 as overlaying and contacting the display surface 32. The optical element 26 may be formed of a clear material such as glass or polymer. It will be appreciated that the material selected may be selected based on providing a particular index of refraction. The top view of the optical element 26 is depicted as having three planar faces defining a shape comparable to an isosceles triangle. The optical element 26 has a vertical height that corresponds to the height of the display surface 32, as depicted in Fig. 1. In this non-limiting example, the optical element 26 defines a first direction surface 26A oriented substantially normal or perpendicular to the first direction 16, a second direction surface 26B oriented substantially normal or perpendicular to the second direction 20, and a third direction surface 26C oriented substantially parallel to the display surface 32. It will be understood that if a viewing direction and display surface are not precisely normal there may be some degradation of the image. As used herein, substantially normal means that the corresponding viewing direction and direction surface are sufficiently normal so the image can be discerned by, for example, the driver 14, or the passenger 18. It will also be appreciated that an optical element having a non-isosceles triangle shape or non-planer surfaces may also be useful for viewing the display surface 32. It should also be recognized that other polygons may be used to provide more than two viewing directions. For example, an optical element having a shape like a trapezoid may be used to display an image for viewing from a third direction such as from a position between the driver 14 and the passenger 18.

Fig. 2 illustrates the optical element 26 being in contact with the display surface 32 which may be desirable to minimize optical degradation of the image. Alternately, a polarizer, collimator, other type of filter, or an air gap may be present between the display device 24 and the display surface 32. It will be appreciated that the lateral alignment and distance between the optical device 26 and the display surface 32 is not particularly critical for the dual view display 11 described herein to operate as intended, as is the case for prior art dual view displays relying on parallax to determine the directions for optimal viewing of the prior art dual view displays.

Fig. 2 illustrates the first shutter device 28 as overlying the first direction surface 26A and so is configured to allow viewing of the display surface 32 through first direction surface 26A of the optical element 26 from the first direction 16 during the first time period T1, and block viewing of the display surface 32 from the first direction 16 during the second time period T2. Similarly, the second shutter device 30 is illustrated as overlying the second direction surface 26B and is operated to allow viewing of the display surface 32 through the optical element from the second direction 20 during the second time period T2, and block viewing of the display surface from the second direction during the first time period.

The first shutter device 28 and the second shutter device 30 are generally operable to a transparent state and a blocking or opaque state. The shutter devices 28 and 30 may be formed using various technologies including, but not limited to, liquid crystal display (LCD), electrowetting, electrochromic glass, and electrically switchable transreflective mirrors (ESTM). The shutter devices 28 and 30 may have a single element sized to correspond to the surfaces 26A and 26B, or may have a plurality of elements so that portions of the display surface 32 can be independently viewed or blocked from being viewed. It will be appreciated that the shutter devices 28 and 30 do not need to be the same technology, and so it may be advantageous to have one shutter device be one technology, for example an ESTM, and the other shutter device be a different technology, for example an LCD. Fig. 2 shows a gap between the optical element 26 and the shutter devices 28 and 30 for the purposes of illustration. It will be recognized that the shutter devices 28 and 30 may be integrally formed with the optical element 24 using known processes.

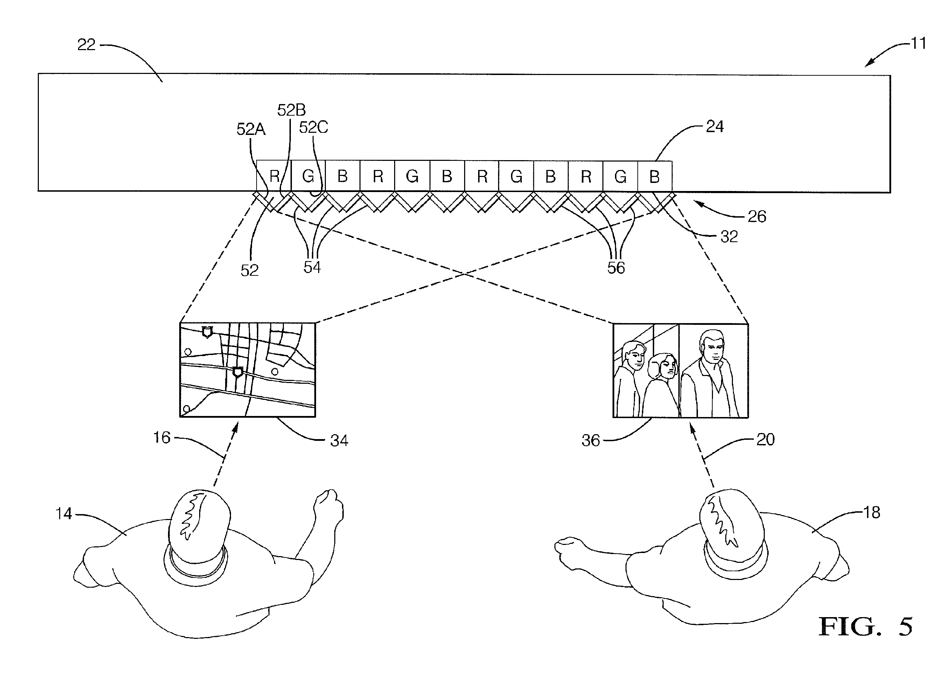

Fig. 5 illustrates another embodiment of a portion of the dual view display 11 wherein the display surface 32 is overlaid by an optical element 26 comprising of a plurality of prisms 52, each prism 52 having a top-view shape corresponding to an isosceles triangle. Similar to as described above, each prism 52 may have a shape other than an isosceles triangle, and may have a shape with more than three sides. Having a plurality of prisms 52 forming the optical element 26 is advantageous over the optical element illustrated in Fig. 2 because the overall depth of the display 11 is reduced, and so may not require recessing the display 11 into the dashboard 22 for aesthetic reasons as suggested in Fig. 2. As such, each prism 52 defines a first direction surface 52A oriented substantially normal to the first direction 16, a second direction surface 52B oriented substantially normal to the second direction 20, and a third direction surface 52C oriented substantially parallel to the display surface 32.

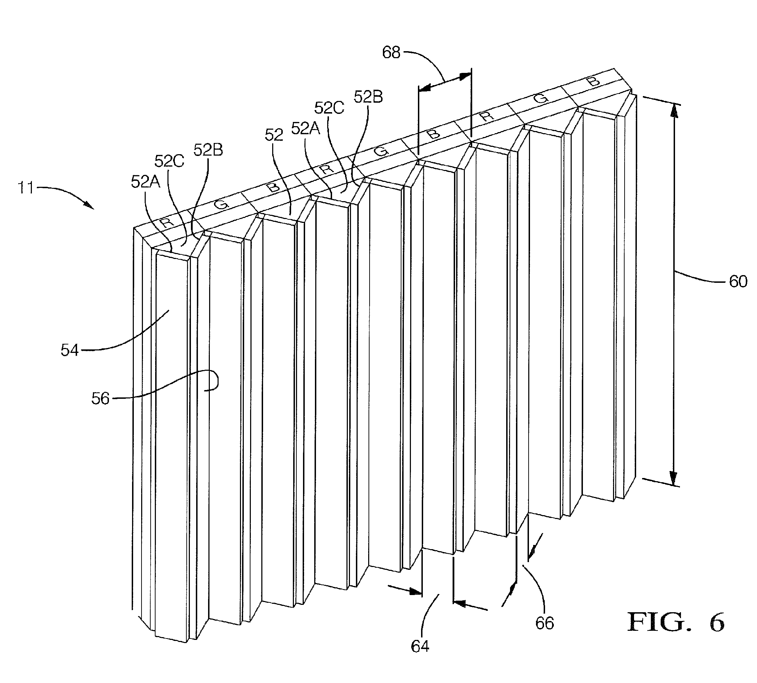

Fig. 6 illustrates an embodiment of a dual view display 11 where each prism 52 may be described as a vertically oriented prism having a height dimension 60 much larger than width dimensions 64, 66, and 68 of the respectively corresponding surfaces 52A, 52B, and 52C. The height dimension 60 of each prism 52 may correspond to the height of the display surface 32. Figs. 5 and 6 suggest that each prism 52 is aligned with a single pixel or column of pixels, for example pixels R, G, and B corresponding to red, green, and blue pixels respectively. However, the prisms 52 may be larger so that each of the prisms 52 has a width 68 that corresponds to more than one pixel. For example a prism 52 may be sized to have a width 68 that corresponds to ten (10) pixels, and so reduce the number of vertically oriented prisms 52 by a factor of 10. Alternatively, each prism 52 may have a height of only one or a few pixels of the display device 24, and so a plurality of rows may be necessary to cover the display surface 32. Each row of prisms 52 may be offset from rows above and below so the display 11 does not have the appearance of vertical lines extending the height of the display 11. For example, each prism 52 may be sized to overlay an area of the display device 24 corresponding to a width of 10 pixels and a height of 10 pixels. It will be recognized that as the width 68 of each prism 52 approaches the width of one pixel, the alignment of each prism 52 with the edge of a pixel becomes more critical if the clarity and brightness of the images displayed is to be maintained.

The arrangement of the prisms 52 shown in Fig. 5 and 6 gives rise to a plurality of first direction surfaces 52A that are substantially parallel with each other, and a plurality of second direction surfaces 52B that are also substantially parallel with each other. As such, to effectively block or allow viewing of an image from a direction, a first shutter device 54 may comprise a plurality of first shutter devices overlying each of the plurality of first direction surfaces 52A and a second shutter device 56 may comprise a plurality of second shutter devices overlaying each of the plurality of second direction surfaces 52B.

ccordingly, a dual view display system 10 for displaying different images in different directions is provided. By using an optical element and two shutter devices, a system 10 displaying two distinct images is provided for less cost than two separate displays. The arrangement of the display device 24, optical element 26, and two shutter devices 28 and 30 do not require precise physical alignment as is the case with other dual view displays, particularly those relying on parallax to control the direction that images are displayed. Furthermore, the full resolution of the display device is maintained for both images, unlike the parallax based dual view display devices that halve the resolution of each image relative to the resolution of the display to display two distinct images.

## Claims

1. A dual view display system (10) comprising:
a display device (24) configured to display a first image on a display surface (32) during a first time period and display a second image distinct from the first image on the display surface (32) during a second time period distinct from the first time period;
an optical element (26) overlaying the display surface (32), said optical element (26) configured to direct images displayed on the display surface (32) toward a first direction and a second direction distinct from the first direction;
**characterised by**
a first shutter (28) device configured to allow viewing of the display surface (32) through the optical element (26) from the first direction during the first time period, and block viewing of the display surface (32) from the first direction during the second time period; and
a second shutter device (30) configured to allow viewing of the display surface(32) through the optical element (26) from the second direction during the second time period, and block viewing of the display surface (32) from the second direction during the first time period.

2. The system (10) in accordance with claim 1, wherein the optical element (26) defines a first direction surface (26A) oriented substantially normal to the first direction, a second direction surface (26B) oriented substantially normal to the second direction, and a third direction (26C) surface oriented substantially parallel to the display surface (32).

3. The system (10) in accordance with claim 2, wherein the first shutter device (28) overlays the first direction surface (26A) and the second shutter device (30) overlays the second direction surface (26B).

4. The system (10) in accordance with claim 1, wherein the optical element (26) comprises a plurality of prisms (52), wherein each prism defines a first direction surface (26A) oriented substantially normal to the first direction, a second direction surface (26B) oriented substantially normal to the second direction, and a third direction surface (26C) oriented substantially parallel to the display surface (32).

5. The system (10) in accordance with claim 4, wherein each of the plurality of prisms (52) is a vertically oriented prism.

6. The system (10) in accordance with claim 4, wherein the first shutter device (28) overlays each of the plurality of first direction surfaces (26A) and the second shutter device (30) overlays each of the plurality of second direction surfaces (26B).

7. The system (10) in accordance with claim 1 and 6, wherein the first shutter device (28) comprises a first liquid crystal device (LCD), and the second shutter device (30) comprises a second LCD device.

8. The system (10) in accordance with claim 1, wherein the first shutter device (28) comprises a first electrowetting type device, and the second shutter device (30) comprises a second electrowetting type device.

9. The system (10) in accordance with claim 1, wherein the first shutter device (28) comprises a first electrochromic glass device, and the second shutter (30) device comprises a second electrochromic glass device.

10. The system (10) in accordance with claims 7-9, wherein the first shutter device (28) uses a different technology than the second shutter device (30) and wherein the technologies are elektrochromic glass or electrowetting or LCD
